# EUROPEAN PATENT APPLICATION

(11) **EP 3 508 367 A1**
(43) Date of publication of application: **10.07.2019**
(21) Application number: 17845062.3
(22) Date of filing: 14.07.2017
(51) Int. Cl.: B60K 1/04, H01M 2/10, F16B 5/02

(54) **BATTERY BOX LOCKING DEVICE AND BATTERY BOX COMPRISING SAME**

(30) Priority: 31.08.2016 CN 201610791996
(71) Applicant: Nio Co., Ltd., Shanghai 201804 (CN)
(72) Inventor: HAO, Zander, Shanghai 201804 (CN)
(74) Representative: Vossius & Partner Patentanwälte Rechtsanwälte mbB
(86) International application number: PCT/CN2017/092882
(87) International publication number: WO 2018/040759

(57) **Abstract**

A battery pack lock mechanism (3) and a battery pack (2) comprising the battery pack lock mechanism (3), in which the battery pack lock mechanism (3) comprises a housing (31), a thread bolt (32), a flange (33), a spring (34) and a hemp disk assembly (314, 315). The flange (33) is unable to rotate around the axis of the bolt (32), but can slide along its axial direction. The spring (34) can press the flange (33) so that the spike-like protrusions (315) of the flange (33) are engaged with the hemp stopper (314) on the housing (31), so that the flange (33) and the bolt (32) can't rotate relative to the housing (31), and the bolt (32) can connect the housing (31) to the body of an electric vehicle (1). Thanks to the previously noted structure, the lock mechanism is not only able to safely and reliably install and quickly and conveniently replace the battery pack, but also able to prevent loosing of the battery pack during long period of vehicle body vibration by means of rigidly fastening the pack.

## Description

### TECHNICAL FIELD

The present application relates to installation and swap of electric vehicle battery, particularly to a battery pack lock mechanism and a battery pack with such a lock mechanism.

### BABKGROUND

As a country relatively short of petroleum, China has to import a great deal of crude oil and product oil. An increasing number of vehicles in use bring about great pressure on domestic fuel oil supply. Widely promoting electric vehicles will not only bring benefit to national security of petroleum and energy resources but also make us rely less on import of vehicle oil. Therefore, development of electric vehicles is an important strategic choice guaranteeing sustainable growth of vehicle industry.

A beneficial supplement to battery recharging is to replace drained batteries in electric vehicles. Vehicles are rapidly supplied with new energy by replacing drained batteries, as a result of which replenishing electric vehicles with energy is as convenient as refueling fuel vehicles with fossil fuel, the only difference is that fuel tanks will be replaced as well each time. Exchanging batteries of electric vehicles makes it possible to realize 'Peak Load Shifting' of power grid and to help in boosting equipment using efficiency and reducing maximum load of power grid as well. Furthermore, with convenient maintenance and longer lifespan of battery, replacing batteries is worthy of being popularized in such specific fields as public transit, car rental and logistics.

Many electric vehicles designed to be powered by replacing batteries locate their power batteries at their chassis, separating batteries from drivers and passengers. Accordingly, larger available space, safer driving environment, lower gravity center of the vehicle and enhanced vehicle operating performance can be ensured. Thus, the technology of installing and replacing batteries located on chassis is the trend in development of electric vehicles with swappable batteries.

Power battery is the only power source of an electric-only vehicle, which is usually swapped by automation equipments due to its heavy weight as well as backbreaking manual labor and risk of hand operation. The battery pack needs to be locked after installation. The more firmly it is installed, the safer it will be. Since it is necessary to unlock the battery pack when exchanging the battery, it will be better to more simply and quicker to install and detach it. Accordingly, the on-board security and reliability as well as the convenient exchanging of the battery pack depend on the performance of lock mechanism.

Existing swappable battery packs are flexibly fastened onto vehicles by locking devices and are more or less vibrated with respect to the vehicles during driving. If things continue in this way, many serious problems, such as local deformation of battery packs, deformation of suspension points on vehicle bodies, local wear of the locking devices as well as arc discharge and burning arc of electric connector, may be resulted in, severely endangering safe driving. Previously described problems can't be resolved by any existing swappable battery packs. Accordingly, there is a need for battery pack lock mechanism which is not only safe, reliable and easy to replace, but also able to prevent loosing of the battery pack during long period of vehicle body vibration.

### SUMMARY

To resolve the above described problems in the prior art, i.e., the battery pack is unable to be safely and reliably installed, to be conveniently swapped and to be well protected during long period of vehicle body vibration, the present application provides a battery pack lock mechanism. The lock mechanism comprises a housing fastened to the battery pack, a fastener extending through the housing, a flange partly received in the housing, compressing element received in the housing and anti-loose member provided between the housing and the flange, wherein the flange is configured to extend through the wall of the housing and rotatable in relation to the housing, the fastener is configured to extend through the flange and able to slide in axial direction of the flange but unable to rotate relative to the flange, wherein the fastener is capable of connecting the housing and the battery pack to body of an electric vehicle, wherein in non-operating state of the fastener, the compressing element can press the flange against inner wall of the housing, and at the same time the anti-loose member prevents the flange and the housing from rotating relative to one another.

In an optimized embodiment of the above described battery pack lock mechanism, the housing includes an upper housing and a lower housing connected together, between which a central cavity is formed, the central cavity receives the fastener and part of the flange, wherein in non-operating state of the fastener, one end of the compressing element presses the flange, which is therefore made in pressing contact with the inner wall of the lower housing, another end of the compressing element presses against the inner wall of the upper housing.

In an optimized embodiment of the above described battery pack lock mechanism, the anti-loose member includes spike-like protrusions provided on the flange and the hemp stopper provided on the inner wall of the lower housing; or the anti-loose member includes a hemp stopper provided on the flange and spike-like protrusions provided on the inner wall of the lower housing.

In an optimized embodiment of the above described battery pack lock mechanism, the fastener is a thread bolt which includes a first end, a second end and a shoulder between them, the first end of the fastener extends through a first through-hole of the upper housing, the second end of the bolt extends through a second through-hole of the lower housing, the first end is provided with threads so as to be threadingly connected to a nut in the vehicle body, the shoulder is situated within the central cavity and rests against the flange in non-operating state of the fastener.

In an optimized embodiment of the above described battery pack lock mechanism, the flange includes a transverse annular portion and a vertical annular portion integrally formed together, the transverse portion is provided at its center with a third through-hole of noncircular cross section, which is in communication with center through-hole of the vertical annular portion, the vertical annular portion extends through the second hole of the lower housing.

In an optimized embodiment of the above described battery pack lock mechanism, the second end of the fastener inserted through the third through-hole and the center hole of the vertical annular portion has a noncircular cross section matching the third through-hole, so that the fastener and the flange can't rotate with respect to one another.

In an optimized embodiment of the above described battery pack lock mechanism, the side walls of the upper and lower housings are provided with connecting holes, the amount and location of which are the same as one another, the upper and lower housings are connected together by bolts or rivets inserted through these connecting holes.

In an optimized embodiment of the above described battery pack lock mechanism, the end face of the second end of the fastener is provided with a noncircular groove used for detaching and fitting.

In an optimized embodiment of the above described battery pack lock mechanism, the compressing element is spring.

In another aspect, the present application provides a battery pack comprising the battery pack lock mechanism as set forth in any one of preceding solutions.

It is noted that, the above mentioned 'non-operating state of the fastener' means the fastener not being screwed firm or loosed by a detaching and fixing tool. In contrary, due to special structure of the present application, it also means the flange being pushed up by a detaching and fixing tool, besides the fastener being screwed firm or loose.

It will be appreciated by those skilled in the art that thanks to the previously noted combinational structure of spike-like protrusions and hemp stopper, the lock mechanism of the present application is not only able to safely and reliably install as well as quickly and conveniently replace the battery pack, but also able to realize circumferential fastening of the battery pack connecting component, so as to effectively prevent loosing of the battery pack during long period of vehicle body vibration.

### BRIEF DESCRIPTION OF THE DRAWINGS

Figure 1 is a structural cross-section view of the battery pack lock mechanism according to the present application;
Figure 2 is a cross-section view of the battery pack lock mechanism according to the present application in its first operating state;
Figure 3 is a cross-section view of the battery pack lock mechanism according to the present application in its second operating state; and
Figure 4 is a cross-section view of the battery pack lock mechanism according to the present application in its third operating state.

### DETAILED DESCRIPTION

The preferred embodiments of the present application will be described below with reference to the accompanying figures. As will be understood by those skilled in the art, these embodiments are simply used for interpreting the technical principle of the present application and are not intended to limit its protection scope in any way. For example, although each member in the figures is drawn to scale, this proportional relation is merely exemplary in nature and can be modified as desired to accommodate specific applications by those skilled in the art.

It should be noted that in the description of the present application, the usage of such directional and positional terms as 'central', 'upper', 'lower, 'left', 'right', 'vertical', 'horizontal', 'inner' and 'outer', is based on the directional and positional relations shown in the drawings, and used to facilitate the description itself and does not express or imply the necessary specific positions or specific operational and structural positions of the devices or elements of the disclosure. Therefore, the usage is not to be understood as limitation on the present application. Additionally, terms 'first', 'second' and 'third' are merely provided for the purposes of description rather than expressing or implying their relative importance.

Moreover, it should also be noted that, in the description of the present application, unless otherwise specified and defined, the terms of 'install' and 'connect', should be construed in their broad meaning, which can be understood as permanent or detachable or integrally connecting, mechanically or electrically connecting, direct connecting or indirect connecting via a third part, or even connecting between the inner parts of two elements. Those skilled in the art could interpret the specific meanings of the above mentioned terms based on the context.

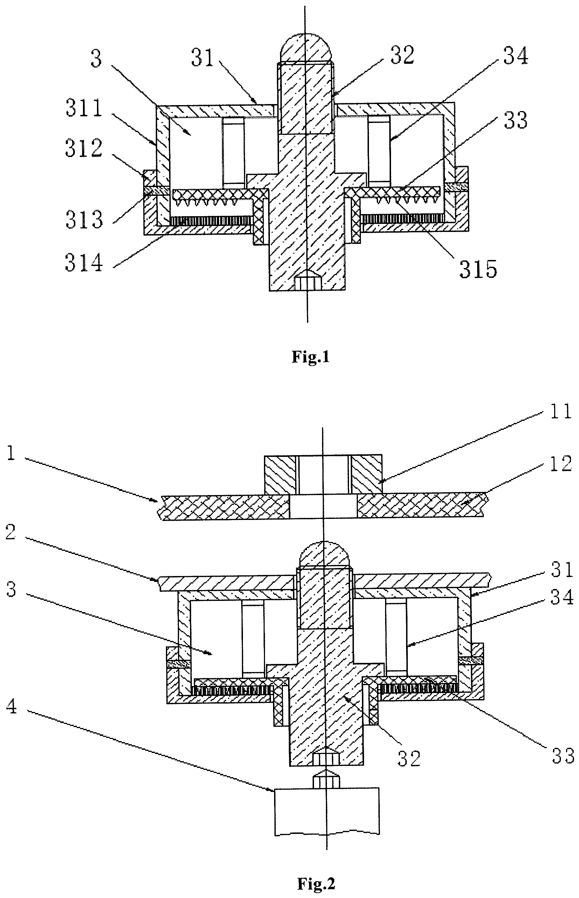

Figure 1 is a schematic illustration of a specific embodiment of a battery lock mechanism 3 of the present application. The battery lock mechanism 3 comprises a housing 31, a threaded bolt 32, a flange 33 and a spring 34. The flange 33 is configured to be able to slide along the threaded bolt 32 but unable to rotate around the axis of the threaded bolt 32. Specifically, one end of the bolt 32 (lower end of the bolt 32 shown in Figure 1) is configured to be of noncircular cross section (hexagon, for example), and a slightly larger hole with the same shape and size as the bolt is provided at the center of the transverse annular portion of the flange 33. The above mentioned purpose is achieved by inserting the noncircular cross section end of the bolt 32 into the respective hole of the transverse annular portion of the flange 33. Spring 34 is able to press the flange 33 which in turn pressingly contact the inner wall of the housing 31. The surfaces of the flange 33 and the housing 31 in frictional contact with one another have higher frictional coefficient such that they won't slide relative to each other due to higher frictional force upon their pressing contact with each other. However, in an optimized embodiment, the contact surfaces of the flange 33 and the housing 31 are provided with a 'hemp disk assembly with spike-like protrusions'. Specifically, the 'hemp disk assembly with spike-like protrusions' includes spike-like protrusions 315 and a hemp stopper 314, which is formed by pressing hemp fiber and then fixing it with a metal loop. The hemp stopper 314 is easy to be penetrated into by the spike-like protrusions and the holes will close automatically after pulling out the spike-like protrusions. More specifically, the spike-like protrusions 315 can be provided on the contact surface of the flange 33 and the hemp stopper 314 can be provided on the contact surface of the housing 31; or the hemp stopper 314 is on the contact surface of the flange 33 and the spike-like protrusions 315 are on the lower housing of the housing. As such, the spike-like protrusions 315 penetrate into the hemp stopper 314 upon the pressing contact of the flange 33 and the housing 31, the relative turn between which is therefore avoided, thereby preventing the blot 32 and the housing 31 from rotating with respect to each other. Thus, a fastened battery pack 2 is free of loosening.

Referring next to Figure 2, after fixing the housing 31 to battery 2, the housing 31 and the battery 2 can be threaded to the nut 11 of the body 1 of an electric vehicle with the threaded bolt 32. In a specific embodiment, the bolt 32 is provided with male threads (as shown in drawings) and the respective installing base is provided with female threads (not shown in drawings), but the battery lock mechanism 3 according to the present application can also be designed that the bolt 32 is of female threads (not shown in drawings) and the respective installing base is provided with male threads (not shown in drawings). It is noted that the bracket 12 shown in Figure 2 can be either the body of an electric vehicle or the part on an electric vehicle used for fixing the battery pack.

In a preferred embodiment, the housing 31 includes an upper housing 311 and a lower housing 312, side portions of which are riveted together by one or more rivets 313, a central cavity formed between the two housings receives the spring 34 and part of the transverse annular portion of the flange 33. One end of the spring 34 presses the flange 33, which in turn pressingly contacts the inner wall of the lower housing 312, another end of the spring 34 pressingly contact the inner wall of the upper housing 311. In the present application, 'pressing contact or pressingly contact' means the two involved components are in contact with one another and apply pressing forces to one another.

In a preferred embodiment, the thread bolt 32 includes a first end, a second end and a shoulder between them. The bolt 32 extends through the central cavity. Specifically, the first end of the bolt 32 extends through a through-hole of the upper housing 311 and part of it extends out of the upper housing 311, and the vertical annular portion of the flange 33 and the second end of the bolt 32 received in it extend through a through-hole of the lower housing 312 and part of them extend out of the lower housing 312. The first (upper) end of the bolt 32 is provided with threads so as to be threadingly connected to the nut 11 of the vehicle body 1, the second (lower) end of the bolt 32 is configured to have noncircular cross section and insert into the respective matching noncircular hole of the vertical annular portion of the flange, so that the bolt 32 and the flange 33 cannot rotate in relation to each other but can slide in axial direction of the bolt 32. In a preferred embodiment, the second end of the bolt 32 is provided with a noncircular groove used for detaching and fitting, such as a hexagon groove. A tool 4 used for detaching and fitting has a projection matching the noncircular groove, the projection is inserted into the groove and makes the bolt 32 rotate, so that as its rotation, the bolt 32 can be threaded into or out of the nut 11. The shoulder of the bolt 32 is situated within the central cavity and rests against the transverse portion of the flange 33. In the present application, the dimensions (in the direction perpendicular to the bolt 32) of at least one part of the 'shoulder' are greater than those of the first and second ends of the bolt 32 and those of the through-hole of the upper housing 311 extended by the first end of the bolt 32 and the through-hole of the transverse annular portion of the flange 33 extended through by the second end of the bolt 32, as a result of which the axial movement of the bolt 32 is limited to a certain extent.

Preferably, the upper housing 311 of the housing 31 is connected to the battery pack 2, and the lower housing 312 is in pressing contact with the transverse annular portion of the flange 33. The upper housing 311 includes a top wall and a side wall, and the lower housing 312 includes a bottom wall and a side wall. As mentioned above, the top wall of the upper housing 311 is provided with an upper through-hole and the bottom wall of the lower housing 312 is provided with a lower through-hole. The first end of the bolt 32 extends through the upper through-hole on the upper housing, and the vertical annular portion of the flange 33 and the second end of the bolt 32 received in the vertical annular portion extend through the lower through-hole, and the vertical annular portion of the flange 33 is able to rotate in the lower through-hole. Both the side walls of the upper and lower housings 311 and 312 are provided with connecting holes, the amount and location of the two groups of holes are the same as one another. The upper and lower housings 311 and 312 are connected together by plugging bolts or rivets 313 through these connecting holes.

With continued reference to Figure 2 which is a cross sectional view of the battery pack lock mechanism 3 of the present application in its first operating state, vehicle body 1 is provided with a bracket 12 and a nut 11 mounted on the bracket 12. In the state shown in Figure 2, lock mechanism 3 is just put near the body 1, the detaching and fitting tool 4 hasn't been inserted into the lower end of the bolt 32.

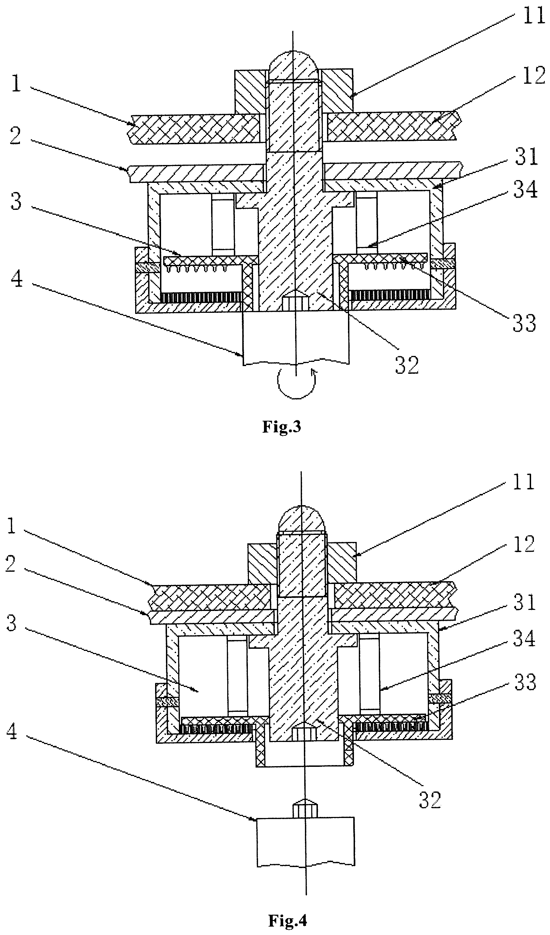

With continued reference to Figure 3 which is a cross sectional view of the battery pack lock mechanism 3 of the present application in its second operating state, in the state shown in Figure 3, detaching and fitting tool 4 is inserted into the noncircular detaching and fitting groove of the second end of the bolt 32, and the tool 4 turns and hence pushes upward the threaded bolt 32 and flange 33, so that the spring 34 is pressed upward. In this regard, it is pointed out that it is necessary for the tool 4 to be shaped so as to raise the flange 33 when operating the bolt 32. Accordingly, the contact surfaces of the flange 33 and the lower housing 312 of the housing 31 are separated by a gap, the spike-like protrusions 315 are thus pulled out of the hemp stopper 314. As such, the flange 33 and therefore the bolt 32 can be rotated in relation to the housing 31 in the direction indicated by the row shown in the figure, the bolt 32 can be threadingly connected with the nut 11, thus fastening the battery pack 2 to the vehicle body 1. Of course, the threaded connection between the bolt 32 and the nut 11 can be disconnected by plugging the tool into the noncircular groove of the second end of the bolt 32 and then rotating the bolt 32 in reverse direction, in this way the battery pack 2 can be detached from the vehicle body 1.

Figure 4 is a cross sectional view of the battery pack lock mechanism of the present application in its third operating state. In the state shown in Figure 4, the battery pack 2 is locked and the detaching and fitting tool 4 is removed, the flange 33 moves downward under the pressure of the spring 34, the gap between the housing 31 and the flange 33 is therefore narrowed to vanishing point, the spike-like protrusions 315 on the lower surface of the transverse annular portion of the flange 33 are inserted into the hemp stopper 314 on the inner wall of the lower housing 312 again, and as a result the bolt 32 and the flange 33 can't rotate relative to each other. It is well known to those skilled in the art that if the threaded connection for fixing the battery pack 2 has a tendency of loosening due to vibration and tension of the pack, the bolt 32 will certainly rotate relative to the housing 31. Owing to the structure of the present application, the bolt 32 and the housing 31 can't rotate with respect to each other. Accordingly, the fixing of the battery pack 2 will not become loosened.

Also provided by the present application is a battery pack which is locked by at least one lock mechanism 3 according to the present application. The battery pack includes a through-hole for the bolt 32 to extend through.

The technical solutions of the invention have been described with reference to the preferred embodiments shown in the accompanying figures. As will be appreciated by those skilled in the art, however, these specific embodiments are not intended to limit protection scope of the invention. Without departing from the principle of the invention, various changes may be made and equivalents may be substituted for related technical features, the varied or substituted technical solutions will fall within protection scope of the invention.

## Claims

1. A battery pack lock mechanism comprising a housing fastened to the battery pack, a fastener extending through the housing, a flange partly received in the housing, a compressing element received in the housing and an anti-loose member provided between the housing and the flange,
wherein the flange is configured to extend through the wall of the housing and rotatable in relation to the housing, the fastener is configured to extend through the flange and able to slide in axial direction of the flange but unable to rotate relative to the flange,
wherein the fastener is capable of connecting the housing and the battery pack to body of an electric vehicle,
wherein in non-operating state of the fastener, the compressing element can press the flange against inner wall of the housing, and at the same time the anti-loose member prevents the flange and the housing from rotating relative to one another.

2. The battery pack lock mechanism as set forth in claim 1, wherein the housing includes an upper housing and a lower housing connected together, between which a central cavity is formed, the central cavity receives the fastener and part of the flange,
wherein in non-operating state of the fastener, one end of the compressing element presses the flange, which is therefore made in pressing contact with the inner wall of the lower housing, another end of the compressing element presses against the inner wall of the upper housing.

3. The battery pack lock mechanism as set forth in claim 2, wherein the anti-loose member includes spike-like protrusions provided on the flange and the hemp stopper provided on the inner wall of the lower housing; or the anti-loose member includes a hemp stopper provided on the flange and spike-like protrusions provided on the inner wall of the lower housing.

4. The battery pack lock mechanism as set forth in claim 3, wherein the fastener is a thread bolt which includes a first end, a second end and a shoulder between them, the first end of the fastener extends through a first through-hole of the upper housing, the second end of the bolt extends through a second through-hole of the lower housing, the first end is provided with threads so as to be threadingly connected to a nut in the vehicle body, the shoulder is situated within the central cavity and rests against the flange in non-operating state of the fastener.

5. The battery pack lock mechanism as set forth in claim 4, wherein the flange includes a transverse annular portion and a vertical annular portion integrally formed together, the transverse portion is provided at its center with a third through-hole of noncircular cross section, which is in communication with center through-hole of the vertical annular portion, the vertical annular portion extends through the second hole of the lower housing.

6. The battery pack lock mechanism as set forth in claim 5, wherein the second end of the fastener inserted through the third through-hole and the center hole of the vertical annular portion has a noncircular cross section matching the third through-hole, so that the fastener and the flange can't rotate with respect to one another.

7. The battery pack lock mechanism as set forth in claim 6, wherein the side walls of the upper and lower housings are provided with connecting holes, the amount and location of which are the same as one another, the upper and lower housings are connected together by bolts or rivets inserted through these connecting holes.

8. The battery pack lock mechanism as set forth in claim 7, wherein the end face of the second end of the fastener is provided with a noncircular groove used for detaching and fitting.

9. The battery pack lock mechanism as set forth in any one of preceding claims 1-8, wherein the compressing element is a spring.

10. A battery pack comprising the battery pack lock mechanism as set forth in any one of preceding claims 1-9.
